# EUROPÄISCHE PATENTANMELDUNG

(11) **EP 0 699 984 A2**
(43) Veröffentlichungstag der Anmeldung: **06.03.1996**
(21) Anmeldenummer: 95113517.7
(22) Anmeldetag: 29.08.1995
(51) Int. Cl.: G05D 16/20

(54) **Kompaktregler für ein Regelventil**

(30) Priorität: 03.09.1994 DE 4431463
(71) Anmelder: HONEYWELL AG, D-63067 Offenbach am Main (DE)
(72) Erfinder: Engel, Hans O., Dipl.-Ing., D-63454 Hanau 6 (DE)
(74) Vertreter: Herzbach, Dieter, Dipl.-Ing.

(57) **Zusammenfassung**

Es wird ein Kompaktregler (32) für ein durch einen pneumatischen Membranantrieb gesteuertes Regelventil (10) vorgeschlagen, bei dem ein E/P-Signalumformer eine Regelabweichung, die aus der Differenz zwischen einem elektrischen Standard-Sollwertsignal und einem umgeformten elektrischen Istwertsignal gebildet wird, in ein pneumatisches Drucksignal für den Membranantrieb umsetzt. Zur Vermeidung eines Stellungsreglers wird das elektrische Istwertsignal aus der Regelgröße selbst gewonnen und der aus mehreren Modulen (34,36,38) bestehende Regler (32) wird direkt an den pneumatischen Membranantrieb (12) angeflanscht.

## Beschreibung

Die vorliegende Erfindung bezieht sich auf einen Kompaktregler für ein durch einen pneumatischen Antrieb gesteuertes Regelventil nach dem Gattungsbegriff des Patentanspruches 1.

Derartige Regelventile werden in großer Anzahl in Schlüsselindustrien mit Prozeßautomation verwendet und durch Prozeßleitsysteme gesteuert. Die Prozeßleitsysteme erteilen Befehle zur Steuerung der Regelventile im Feld in Form von elektrischen/elektronischen Signalen, während die Ventile selbst auch heute noch zum überwiegenden Teil durch pneumatische Antriebe betätigt werden. Dies bedingt die Umformung eines elektrischen Standardsignales im Bereich von 4-20 mA in ein entsprechendes Druckluftsignal von z.B. 0,2-1,0 bar. Zur Umformung kommen bekannte elektropneumatische Umformer zur Anwendung, die beispielsweise aus einem Düse/Prallplatte-System bestehen, wobei die Prallplatte durch eine Magnetspule gesteuert wird oder aus einer Piezoplatte besteht, die elektrisch angesteuert wird. Da derartige E/P-Umformer oftmals in ihrer Funktion lageabhängig sind, ist es bereits bekannt, den Ausgangsdruck (Istwert) in ein elektrisches Signal zurückzuwandeln und mit dem Standard-Sollwertsignal zu vergleichen. Da hierbei jedoch hysteresebedingte Stellungenauigkeiten, z.B. durch Reibung der Ventilstange in der Stopfbuchse nicht auszuschließen sind, sind bislang Stellungsregler bei Stellgeräten mit konstanter Regelung praktisch unverzichtbar. Der diesbezügliche Stand der Technik kann z.B. der GB-PS 1 551 039 entnommen werden.

Stellungsregler bringen eine Reihe von Vorteilen mit sich, weisen aber trotz einer erheblich verbesserten Funktionalität und Zuverlässigkeit immer noch eine Reihe von Nachteilen bzw. Schwachpunkten auf. So ist die Einstellung zeitraubend und nicht ganz einfach, weil eine Bereichsänderung in der Regel eine Nullpunktverschiebung nach sich zieht und umgekehrt. Stellungsregler sind zudem relativ teuer und machen einen beträchtlichen Anteil des Gesamtpreises des Stellgerätes aus. Ferner erschweren sie häufig einen stabilen Regelbetrieb wegen einer zu hohen, oftmals nicht einstellbaren Verstärkung. Dies zwingt den Anwender meistens zu einem Kompromiß zwischen hoher Verstärkung mit entsprechender Stellgenauigkeit bzw. Reproduzierbarkeit und Stabilität des Stellungsregelkreises, die vorrangig garantiert werden muß. Ferner erlauben Stellungsregler keine universelle Anwendung. Dies ist regelungstechnisch bedingt. So muß z.B. bei sehr schnellen Regelstrecken, wie beispielsweise bei Flüssigkeitsdruckregelungen meistens auf einen Stellungsregler ganz verzichtet werden, weil ein stabiler Regelbetrieb nicht zu erreichen ist. Ein Hauptnachteil des Stellungsreglers liegt in der Tatsache, daß ein mechanischer Abgriff des Ventil- oder Antriebshubes bzw. Drehwinkels erforderlich ist. Die Details der Montage von Stellungsreglern an pneumatischen Antrieben, einschließlich des Abgriffs des Hubes ist entsprechend genormt, um jeden Stellungsregler an jeden Antrieb anbauen zu können. Diese bewährte Anbauweise ist in letzter Zeit in Kritik geraten, weil dadurch eine Verletzungsgefahr besteht. Einige Hersteller haben deswegen eine spezielle, nicht genormte Anbauweise vorgesehen, wobei der Hubabgriff entsprechend geschützt ist.

Die Anwender stellen heutzutage Forderungen, die weder die bisher zur Anwendung gelangten analogen Stellungsregler, noch die modernen digitalen busfähigen Stellungsregler erfüllen. So besteht die Forderung nach Entlastung der Prozeßleitsysteme von einfachen Regelvorgängen. Die Regelung sollte möglichst im Feld erfolgen, was bedeutet, daß der Regler nicht mehr in der Warte angeordnet bzw. Teil des Prozeßleitsystems ist, sondern mit in den Signalwandler integriert wird. Dies setzt eine Kommunikationsfähigkeit des Feldgerätes voraus, um den Sollwert von der Warte aus verändern zu können. Die Funktion des Prozeßleitsystems beschränkt sich dann hauptsächlich auf die Überwachung. Ferner sollen kurze Verbindungswege der einzelnen Komponenten, wie Sensor, Regler und Antrieb den Verkabelungs- und Verrohrungsaufwand drastisch reduzieren. Schließlich besteht die Forderung nach Integration verschiedener Funktionen, um den Informationsgehalt der Kommunikation zwischen Stellgerät und zentraler Warte zu erhöhen.

Ausgehend von diesem Stand der Technik ist es die Aufgabe der vorliegenden Erfindung, einen Kompaktregler anzugeben, der die vorstehend erwähnten geforderten Eigenschaften aufweist.

Die Lösung dieser Aufgabe gelingt gemäß den kennzeichnenden Merkmalen des Patentanspruches 1. Weitere vorteilhafte Ausgestaltungen des erfindungsgemäßen Kompaktreglers sind den abhängigen Ansprüchen entnehmbar.

In diesem Zusammenhang sei vermerkt, daß es an sich üblich ist in der Regelungstechnik, die Prozeßregelgröße selbst, z.B. den Durchfluß als Istwert dem Regler zuzuführen. Bei Regelventilen mit pneumatischem Antrieb wird davon aber bislang kein Gebrauch gemacht. Vielmehr sind nahezu alle diese Regelventile mit einem Stellungsregler ausgerüstet. Soweit Regelgrößen, wie z.B. der Durchfluß gemessen werden, werden diese der Meßwarte mitgeteilt und dort verarbeitet, nicht aber unmittelbar in einem Regler am Ventil.

Anhand der Figuren der beiliegenden Zeichnung sei im folgenden ein Ausführungsbeispiel der vorliegenden Erfindung beschrieben. Es zeigen:
- Fig. 1: das komplette Stellgerät, bestehend aus Regelventil, pneumatischem Antrieb, Istwert-Meßeinrichtung und Kompaktregler; und
- Fig. 2: das Regelssystem in näheren Einzelheiten.

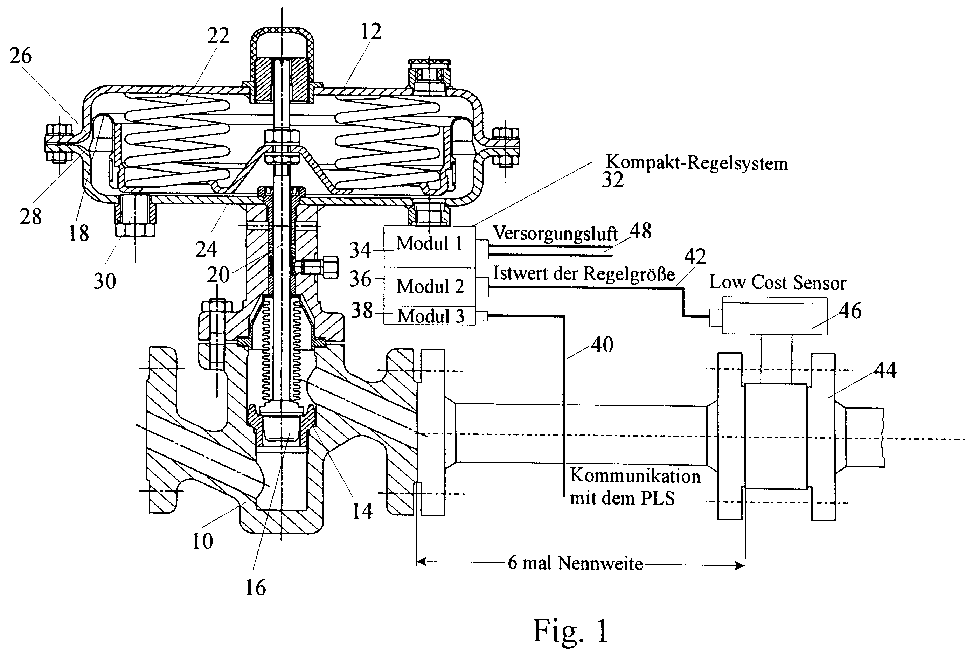

Gemäß Fig. 1 ist auf dem Oberteil eines Regelventils 10 ein pneumatischer Membranantrieb 12 üblicher Bauart montiert. Der Membranantrieb 12 steuert die Hubstellung eines mit einem Ventilsitz 14 zusammenwirkenden Schließkörpers 16, indem er in Abhängigkeit von dem zugeführten pneumatischen Drucksignal über eine Membran 18 eine mit dem Schließkörper 16 verbundene Ventilspindel 20 gegen die Kraft von Rückstellfedern 22 anhebt. Die Ventilspindel 20 ist hierbei an einem Federteller 24 aufgehängt, der seinerseits an der Membran 18 aufgehängt ist, welche zwischen zwei Gehäusehälften 26, 28 des Antriebs 12 eingespannt ist. Jede Gehäusehälfte des Antriebs 12 ist mit einem oder mehreren Einschraubgewinden 30 für pneumatische Fittings versehen.

Ein Kompakt-Regelsystem 32 ist über ein solches Einschraubgewinde 30 unmittelbar an dem Membranantrieb 12 befestigt. Das Kompakt-Regelsystem 32 besteht aus einem Pneumatikmodul 34 und einem Reglermodul 36 und optional aus einem Schnittstellenmodul 38 für den Anschluß an einen Feldbus 40.

Der Istwert für den Reglermodul 36 wird aus der Prozeßregelgröße selbst gewonnen und über eine Leitung 42 dem Reglermodul 36 zugeführt. Bedingt durch die unmittelbare Rückführung der Prozeßregelgröße kann das Pneumatikmodul mit dem Signalwandler sehr einfach und billig ausgeführt werden, weil sich eine Drift - im Gegensatz zu einer indirekten Regelung mit Stellungsregler - nicht nachteilig auf die Genauigkeit bzw. Reproduzierbarkeit auswirkt, solange eine gute Ansprechempfindlichkeit gewährleistet ist. Im vorliegenden Fall sei angenommen, daß die Prozeßregelgröße der Durchfluß ist und zur Messung derselben ist in einem Abstand von dem Regelventil 10, der etwa das 6-fache der Rohr-Nennweite beträgt, ein Durchflußmesser 44 bekannter Bauart angeordnet, dessen Signal in einem Umformer 46 in eine elektrische Größe umgewandelt und dem Reglermodul 36 zugeführt wird. Selbstverständlich kann die Prozeßregelgröße auch durch eine andere Größe, wie z.B. die Temperatur, den Druck usw. vorgegeben sein.

Dem Pneumatikmodul 34 wird Versorgungs-Druckluft aus einer nicht-dargestellten Quelle über einen Schlauch bzw. ein Rohr 48 zugeführt. Dieser Anschluß ist die einzige druckführende Leitung. Eine weitere Verrohrung findet nicht statt. Bewegliche Teile, wie bei einem Stellungsregler, die von außen zugänglich sind und womöglich eine Verletzungsgefahr darstellen, entfallen.

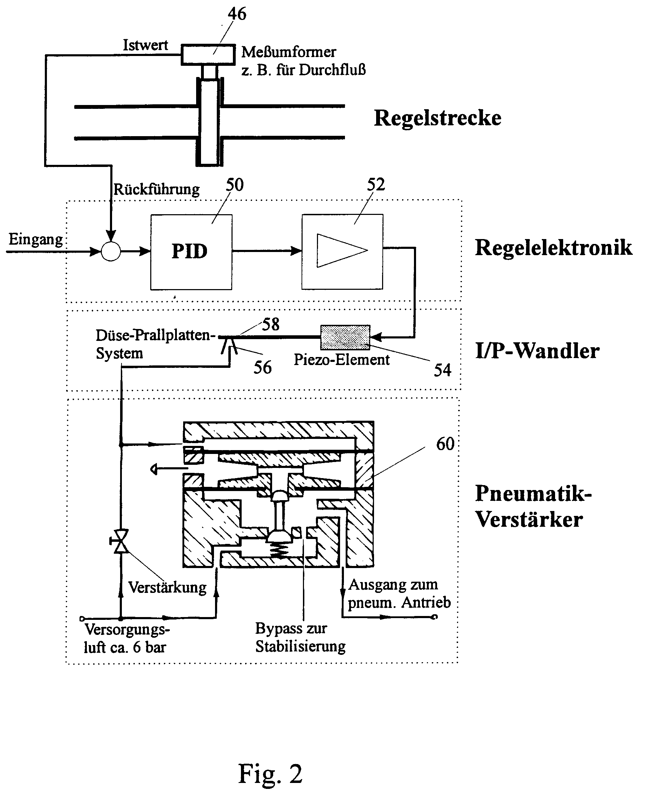

Fig. 2 zeigt das vollständige Regelsystem, das aus bekannten Elementen besteht, deren Aufbau und Wirkungsweise keiner näheren Erläuterung bedarf. Der von dem Meßumformer 46 ausgegebene elektrische Istwert wird mit dem Standard-Sollwertsignal verglichen und die Differenz, d.h. die Regelabweichung beaufschlagt über einen PID-Regler 50, einen Verstärker 52, ein Piezo-Element 54, das eine eine Düse 56 abdeckende Prallplatte 58 bewegt bzw. selbst als Prallplatte ausgebildet ist. Das veränderliche pneumatische Drucksignal wird über einen pneumatischen Mengenverstärker 60 dem pneumatischen Antrieb zugeführt.

Der aus Piezoelement 54 und Düse/Prallplatte-System 56, 58 bestehende I/P-Wandler kann Teil des Reglermoduls 36 oder auch des Pneumatikmoduls 34 sein.

## Patentansprüche

1. Kompaktregler für ein durch einen pneumatischen Antrieb gesteuertes Regelventil mit einem E/P-Signalumformer, der eine Regelabweichung, die aus der Differenz zwischen einem elektrischen Standard-Sollwertsignal und einem umgeformten elektrischen Istwertsignal gebildet wird, in ein pneumatisches Drucksignal für den Antrieb umsetzt, **dadurch gekennzeichnet,** daß das elektrische Istwertsignal durch die Umformung der Regelgröße selbst gewonnen wird und der Regler (32) aus Modulen (34,36,38) besteht, die an den pneumatischen Antrieb (12) direkt angeflanscht sind.

2. Kompaktregler nach Anspruch 1, **dadurch gekennzeichnet,** daß der Regler aus wenigstens einem Pneumatikmodul (34) und einem elektrischen Reglermodul (36) besteht.

3. Kompaktregler nach Anspruch 2, **gekennzeichnet durch** einen weiteren Schnittstellenmodul (38) zum Anschluß an ein Prozeßleitsystem über einen Feldbus (40).

4. Kompaktregler nach einem der Ansprüche 1 bis 3, **gekennzeichnet durch** eine die Prozeßregelgröße erfassende Einrichtung (44) mit zugeordnetem Umformer (46).

5. Kompaktregler nach Anspruch 4, **dadurch gekennzeichnet,** daß die Prozeßregelgröße ein Durchfluß, ein Druck oder eine Temperatur ist und der Meßumformer (Sensor) in einem kurzen Abstand vor oder hinter dem Ventil angeordnet ist.

6. Kompaktregler nach Anspruch 5, **dadurch gekennzeichnet,** daß ein Durchflußmesser (44) in einem Abstand von dem Regelventil (10) angeordnet ist, der wenigstens dem 6-fachen der Rohr-Nennweite entspricht.
